# EUROPÄISCHE PATENTSCHRIFT

(11) **EP 3 625 176 B1**
(45) Veröffentlichungstag und Bekanntmachung des Hinweises auf die Patenterteilung: **16.08.2023**
(21) Anmeldenummer: 18725830.6
(22) Anmeldetag: 17.05.2018
(51) Int. Cl.: C02F 1/22, B01D 9/00, C02F 103/08

(54) **VERFAHREN ZUR HERSTELLUNG VON IONENABGEREICHERTEM WASSER UND HERSTELLUNGSANLAGE**
METHOD AND APPARATUS FOR PRODUCING ION-DEPLETED WATER
PROCÉDÉ ET DISPOSITIF POUR LA PRODUCTION D'EAU APPAUVRIE EN IONS

(30) Priorität: 17.05.2017 DE 102017110727
(43) Veröffentlichungstag der Anmeldung: 25.03.2020
(73) Patentinhaber: Hochschule Mannheim, 68163 Mannheim (DE)
(72) Erfinder: NESSEL, Reimund, 68163 Mannheim (DE); RÄDLE, Matthias, 67273 Weisenheim am Berg (DE); ERLBECK, Lars, 68199 Mannheim (DE)
(74) Vertreter: Blumbach · Zinngrebe Patentanwälte PartG mbB
(86) Internationale Anmeldenummer: PCT/EP2018/062995
(87) Internationale Veröffentlichungsnummer: WO 2018/211037

(56) Entgegenhaltungen:
- CN-U- 205 873 943
- JP-A- 2000 258 005
- US-A- 2 241 726
- US-A- 3 232 218

## Beschreibung

### Beschreibung

### Gebiet der Erfindung

Die Erfindung betrifft ein Verfahren zur Herstellung von ionenabgereichertem Wasser und eine Herstellungsanlage zum Bereitstellen von ionenabgereichertem Wasser. Die wesentlichen Merkmale der Erfindung sind in den unabhängigen Ansprüche 1 und 4 zu finden. Weitere, bevorzugte Ausführungsformen werden in den abhängigen Ansprüchen 2-3, 5-17 beschrieben.

### Hintergrund der Erfindung

Die aktuelle Weltbevölkerung umfasst bereits mehr als 7 Milliarden Menschen. Es wird erwartet, dass diese in den nächsten 90 Jahren auf 10,1 Milliarden anwächst. Es erscheint möglich, dass bis 2025 zwei Drittel der Weltbevölkerung keinen direkten Zugang zu sauberem Wasser haben werden. Gegenden wie Nordafrika, Südwestasien und die Südwestküste von Südamerika sind hierbei Gegenden mit vergleichsweise weniger Möglichkeiten einen direkten Zugang zu erschaffen. Typischerweise haben die Länder, die Wasserknappheit erleiden, auch keine wohlhabende Bevölkerung, abgesehen von ölexportierenden Ländern, weisen aber typischerweise einen hohen Solarüberschuss auf.

Verbesserungen könnten durch den Wassertransport von einem Land zu einem anderen erreicht werden. Dies bedingt aber hohe Kosten und ist typischerweise auf den jeweiligen Kontinent begrenzt. Es wurde in diesem Zusammenhang bereits die künstliche Währung "Virtual Water" eingeführt, die den Handel von Gütern, die viel Wasser zur Produktion benötigen, zu Ländern die mehr als genug Wasser haben, verhindern soll. All dies zeigt, wie wichtig der Zugang zu sauberem Trinkwasser ist bzw. wird.

Eine Möglichkeit der Versorgung mit Trinkwasser stellen Meerwasser-Entsalzungsanlagen dar. Diese hängen stark von dem eingesetzten Entsalzungsprozess ab. Heutzutage dominieren hierbei die Umkehr-Osmose oder Verdampfung. Beiden Technologien ist gemein, dass sie eine Vielzahl verschiedener Chemikalien für den Betrieb benötigen, so dass sie für einen isolierten Einsatz z.B. auf Inseln wenig geeignet sind. Ferner benötigen sie viel elektrische Energie, weshalb die Kombination mit erneuerbaren Energiequellen die Kosten noch weiter steigen lassen würde.

Bestehende Meerwasser-Entsalzungsanlagen, die mit alternativen Energieträgern betrieben werden, um den CO2-Ausstoß zu senken, basieren auf Kombinationen von thermischer Entsalzung mit Kernkraftwerken. "Abfall"-Dampf bzw. -Energie wird hierbei eingesetzt.

Echte erneuerbare Energiequellen werden bereits für Umkehr-Osmose-Anlage eingesetzt. Wasserkosten von 3,14 €/m³ bis 9 €/m³ werden hierbei erreicht.

Thermische Entsalzung mit erneuerbaren Energiequellen könnten Solarenergie direkt nutzen um Wasser zu Verdampfen, es gibt bislang aber nur Forschungstätigkeit hierzu. Kosten werden mit 3,50 €/m³ bis 8 €/m³ erwartet.

Ein zusätzliches Problem beim Betrieb mit erneuerbaren Energien ist die Schwankung der zur Verfügung stehenden Leistung. Die Anlagen müssen daher in der Lage sein, diese Schwankungen zu kompensieren. Dies führt zu einer weiteren Steigerung der Betriebskosten.

Der Prozess der Gefrierkristallisation ist den Menschen bereits seit langer Zeit bekannt, da er auch natürlich vorkommen kann, wie beispielsweise in den Gletschern der Antarktis. Dies wollten sich kalifornische Wissenschaftler zu Nutze machen und schlugen den Transport von Meereis zur kalifornischen Küste vor, um im Anschluss daraus Trinkwasser zu erzeugen.

Beispielsweise zeigt die britische Patentschrift GB409499A, Eisblöcke durch zwei Schnecken zu bewegen und anschließend durch einen verjüngten Austrag zu pressen (F. Luedke, "An ice making apparatus." 1934). Die U.S. Patentschrift US2241726A zeigt ein Verfahren, bei dem die Kristallisation von Wasser in einem mit einer Schnecke versehenen Rohr mit anschließender Pressfunktion dargestellt ist. Hierbei wird während des Pressvorgangs das Eis leicht erwärmt, um die eingeschlossenen Zwickelvolumen leichter aus dem Eis zu bekommen. Das Zwickelwasser wird anschließend abgeführt.

Die Technik wurde in abgewandelter, nicht direkt übertragbarer Form auch für die Auspressung von Lebensmitteln, z.B. Weintrauben, oder für die Erzeugung von Speiseeis adaptiert.

Entwicklungen mit Bezug zur Entsalzung von Wasser hingegen bedürfen in der Regel für die Herstellung von Eis bzw. Trinkwasser einer Nachbehandlung.

So gibt es beispielsweise ein Verfahren, bei dem das Eis in einer Kolonne erzeugt und mittels einer mit Wasser nicht mischbaren Flüssigkeit gewaschen wird (A. Brodt, "METHODS OF DESALINATION AND RINSING; AND THEREFOR," 2015). Statt der Verwendung solch
einer Waschflüssigkeit kann auch kalte Luft oder geschmolzenes Produkt verwendet werden.

Die vorgenannten Erfindungen nutzen als Nachbehandlung das Waschen mittels einer Flüssigkeit. Der Waschung des Kristallisats mittels Trinkwasser ist allerdings nachteilig, dass hierdurch Produkt verschwendet wird.

Für diesen Vorgang empfiehlt beispielsweise die WO2013/060712 A1 stattdessen die Aufreinigung mittels Filtrieren. Yu empfiehlt die Zerkleinerung des Eises mit einer Hammermühle und die anschließende Zentrifugation, die ebenfalls von Wang empfohlen wird (T. Yu, C. Weibin, M. Jun, G. Wei, J. Zhanbin, G. Xiaochong, and L. Chunliang, "Continuous sea ice centrifugal desalination system device and continuous sea ice centrifugal desalination method," 2013; C.-W. Wang, "LIQUID DESALINATION DEVICE," 2015).

Dies bedeutet, dass trotz der bereits reichlich vorliegenden Untersuchungen weiterhin auf dem Gebiet geforscht und eine wirtschaftliche Realisierung angestrebt wird. Trotz der Vorteile konnte bisher aufgrund der Schwierigkeiten insbesondere beim Kühl- und Gefrierprozess keine wirtschaftliche Umsetzung erfolgen. Die bisher benannten Verfahren sind von dem in der vorliegenden Patentanmeldung vorgestelltem sehr unterschiedlich.

Im Labormaßstab konnte bereits dargestellt werden, dass eine Trinkwasserproduktion durch Gefrieren von Meerwasser möglich ist. Jedoch gelang bis heute keine Umsetzung in einen großindustriellen Maßstab, welcher es ermöglichen könnte, viele Menschen mit Trinkwasser zu versorgen und dies bei konkurrenzfähigen Kosten. Dies liegt überwiegend in den Anforderungen einer hohen thermodynamischen Effizienz, geringen Investitionskosten und einem geringen Unterhaltsaufwand begründet. Weitere relevante Dokumente sind US 2 241 726 A, US 3 232 218 A, CN 205 873 943 und JP 2000 258005.

Bereits aufgrund des stetig wachsenden Bedarfs an Verfügbarkeit von Trinkwasser besteht ein ständiges Interesse an neuen effizienteren, ertragreicheren und/oder günstiger zu betreibenden Anlagen und Verfahren zur Herstellung von ionenabgereichertem Wasser.

Die hier beschriebene Erfindung setzt diesen Stand voraus und beschäftigt sich vielmehr mit einem energiesparenden, effektiven regelbaren und kontinuierlichen, einfachen Herstellungsprozess.

### Allgemeine Beschreibung der Erfindung

Die vorliegende Erfindung hat sich vor diesem Hintergrund die Aufgabe gestellt, ein solches Verfahren zur Herstellung von ionenabgereicherter Flüssigkeit - insbesondere Trinkwasser - bereitzustellen, welches weniger ressourcenintensiv arbeitet, insbesondere weniger (vor allem elektrische) Leistung zu deren Betrieb benötigt, insbesondere auch weniger weitere Ressourcen wie beispielsweise Trinkwasser für den Betrieb benötigt. Das Verfahren ist dadurch kostengünstig, es ist zugleich aber auch zuverlässig und langlebig.

Ein weiterer Aspekt der vorliegenden Erfindung ist es, eine Herstellungsanlage zur Herstellung von ionenabgereicherter Flüssigkeit - insbesondere Trinkwasser - bereitzustellen. Auch die Herstellungsanlage arbeitet weniger ressourcenintensiv, benötigt also insbesondere weniger (elektrische) Leistung zu deren Betrieb, verbraucht insbesondere auch weniger weitere Ressourcen wie beispielsweise Trinkwasser. Die Herstellungsanlage ist dadurch kostengünstig, aber auch zuverlässig und langlebig.

In der vorliegenden Erfindung wird auch ein Verfahren beschrieben, welches es ermöglicht, ggf. ohne chemische Zusätze und ohne zusätzliche Filtration gelöste Ionen aus einer Flüssigkeit wie Wasser zu entfernen. Eine bevorzugte Anwendung hierfür ist die Meerwasserentsalzung.

Im Folgenden werden, um das Verständnis zu erhöhen, die Grundideen der Erfindung kurz skizziert, bevor auf die Einzelnen Aspekte vertiefter eingegangen wird.

Das Verfahren stellt Wasser in der Eisphase bereit und ermöglicht, vollständig oder überwiegend ionenfreies Eis aus ionenreichem Wasser herzustellen. Die hierfür eingesetzten Verfahrensschritte wurden bisher noch in keinem anderen kontinuierlichen einfachen Verfahren realisiert.

Ein Aspekt der Erfindung liegt darin, das ionenfreie Eis vom ionenangereicherten (anhaftenden) Wasser zu trennen. Ein weiterer Aspekt der Erfindung liegt darin, es zu ermöglichen, über die Anwendung von Kompressionskältemaschinen - die z.B. solar betrieben werden können - den Großteil der eingesetzten Energie wieder zurückgewinnbar zu machen.

Zum Beispiel kann Wasser, insbesondere Meerwasser, durch ein kaltes Medium heruntergekühlt werden. Beim Herunterkühlen kann das Wasser zur Kristallisation gebracht werden. Dabei entstehen oberhalb des eutektischen Punktes einerseits reine Eiskristalle und andererseits aufkonzentrierte Lösung.

Die Erfinder haben festgestellt, dass sich die Lösung typischerweise in senkrechten Kanälen oder anhaftenden Fluidschichten auf der Eiskristalloberfläche oder in Zwickeln zwischen Partikeln bis hin zu komplett eingeschlossenen Volumina ansammelt. Eine Abtrennung des Eises von der umgebenden Lösung, um Trinkwasser zu erhalten, ist daher nicht einfach. Ferner haben die Erfinder herausgefunden, dass eine Verringerung der eingeschlossenen Volumina durch eine effektive Oberflächenturbulenz (bspw. durch Rühren) erreicht werden kann.

Gegenüber Umkehrosmose-Anlagen sind dabei bei der hier vorgestellten Anlage und dem hier vorgestellten Verfahren in vorteilhafter Weise keine Zusätze von Chemikalien notwendig. Außerdem ermöglichen Umkehrosmose-Anlagen keine Unterbrechung im Betrieb, weil die Membranen bei Unterbrechungen durch Kalkausfällungen verstopfen. Daher können weitere Vorteile im erfindungsgemäßen Verfahren insbesondere im Solarbetrieb (d.h. Speisung der elektrischen Energie mittels Photovoltaik) mit typischer nächtlicher Unterbrechung gesehen werden.

Der Prozess der Gefrierkristallisation basiert auf dem physikalischen Effekt der lonenaustreibung aus wachsenden Kristallen bei der Eisbildung durch Absenkung der Temperatur der Primärflüssigkeit zumindest bis zum Erreichen des Gefrierpunkts, also durch Entziehen von Wärmeenergie. In reinen Kristallen kann konzentrierte angereicherte Flüssigkeit in interkristallinen Kanälen oder Poren gesammelt werden. Das Volumen dieser Kanäle vergrößert sich mit der Konzentration der Ionen. Mit der zwischen den Eiskristallen gefangenen angereicherten Flüssigkeit kann die Masse die Konsistenz eines Breis annehmen.

Durch Änderung von Prozessparametern wie Temperatur oder Turbulenz in der Lösung oder Änderung der Wärmeübertragung können unterschiedliche Wachstumsraten erzielt werden. Höhere Wachstumsraten führen zu komplexeren Verzweigungen im Eiskristall und zu engeren Kanälen mit höherem Strömungswiderstand und weniger lonenaustrieb. Dies passiert, wenn die Lösung um das Eis eine höhere lonenkonzentration und einen niedrigeren Gefrierpunkt aufweist als der Rest der Lösung. An diesen Stellen der "Eisfront" kommt es zu weiterem Kristallwachstum, wodurch Flüssigkeitseinschlüsse ausgelöst werden können. Die Einstellung der Turbulenz bzw. der Durchmischung der Primärflüssigkeit kann dies verbessern, indem der Konzentrationsgradient in der Nähe der "Eisfront" verkleinert wird. Bei der Eisfront handelt es sich um den Bereich, in dem zu einem Zeitpunkt die Eisbildung stattfindet. Die Eisfront kann beispielsweise flächig sein, wenn sich Eis auf einer kalten Fläche bzw. Oberfläche bildet. Die Eisfront kann kugelförmig sein, wenn sich Eis an einem Partikel bzw. "Fremdkörper" im Wasser bildet und von dort ausgehend sich das umliegende Wasser der Eisbildung anschließt.

Die Aufgabe der Erfindung wird durch den Gegenstand der unabhängigen Ansprüche gelöst. Vorteilhafte Weiterbildungen der Erfindung sind in den Unteransprüchen definiert.

Es wird ein Verfahren zur Erzeugung abgereicherter Flüssigkeit, insbesondere zur Erzeugung ionenabgereicherten Trinkwassers vorgestellt. Die abgereicherte Flüssigkeit wird aus einer Primärflüssigkeit hergestellt mit den Schritten Zuführen der Primärflüssigkeit in einen Kristallisator, Kühlung der Primärflüssigkeit in dem Kristallisator, so dass die Primärflüssigkeit in dem Kristallisator in den Bereich einer Phasenübergangstemperatur der Primärflüssigkeit oder darunter abgekühlt wird, und zumindest partielles Überführen der Primärflüssigkeit in die feste Phase zur Erzeugung von Primäreis in dem Kristallisator, sowie Pressung des Primäreises zum Trennen einer angereicherten Trägerflüssigkeit von der abgereicherten Flüssigkeit.

Bei der Kühlung der Primärflüssigkeit in oder unter die Phasenübergangstemperatur flüssig zu fest kristallisiert dabei ein Primäreis.

In einer vorteilhaften Ausführungsform wird das Ausgefrieren des Wassers mit einer Pressung über einen Extrusionsvorgang in einem gemeinsamen Schritt vereint und mit einem ausgeklügelten Energierückgewinnungssystem verbunden.

Vorteilhaft an der Erfindung ist u.a. die geringe notwendige Energiemenge, welche theoretisch im Vergleich zum Verdampfungsprozess nur ca. 1/7 beträgt. (Vgl. Δh_{S} ≈ 333, 1 kJ/kg und Δh_{V} ≈ 2.419 kJ/kg). Weitere Vorteile betreffen die deutlich geringere Exposition für Korrosion und/oder Niederschlag durch Kalk bzw. Mikroorganismen in bzw. an der Anlage. Eine Filtration der suspendierten Teilchen ist bei diesem Verfahren zwar ebenfalls vorteilhaft, jedoch kann in vorteilhafter Weise die biologische und chemische Vorbehandlung entfallen, da beim Kristallisationsprozess die Teilchen oder Moleküle, jedenfalls zumindest überwiegend, aus dem Kristallgitter ausgetrieben werden können. Sie können hernach mit dem "Zwickelwasser" bzw. der angereicherten Flüssigkeit ausgeschwemmt werden.

Werden die einzelnen Methoden des hier vorgeschlagenen im Vergleich zu bekannten Verfahren betrachtet, so wird eine deutliche Vereinfachung der Anlage und geringere laufende Kosten realisiert.

Beispielsweise ist eine automatisierte Anlage, insbesondere ohne Überwachungspersonal, mit dem hier vorgestellten Verfahren bzw. der hier vorgestellten Anlage leichter zu realisieren. Dies ist bedeutend für den Einsatz im privaten Bereich zur Erzeugung des eigenen Trinkwassers. Weiterhin wird durch die geringere Korrosion, bedingt durch die geringeren Temperaturen, eine längere Lebensdauer der Bauteile erreicht, was zu einer Investitionsverteilung über einen größeren Zeitraum und somit zu geringeren Wasserkosten führt.

Es ist für den Fachmann ersichtlich, dass die Erfindung zwar besonders vorteilhaft für die Gewinnung von Trinkwasser verwendbar ist, jedoch prinzipiell auch für andere Maschinen und die Gewinnung anderer abgereicherter oder angereicherter Flüssigkeiten einsetzbar ist. Diese sollen nicht ausgeschlossen sein.

In einer weiteren Ausführungsform des Verfahrens wird die Pressung kontinuierlich während der Primäreiserzeugung durchgeführt.

Die angereicherte Trägerflüssigkeit wird während der Pressung mittels Entwässerungskänalen aus dem Kristallisator abgeleitet werden.

Die Trägerflüssigkeit kann gelöste und/oder disperse Anteile aus der Primärflüssigkeit aufweisen, die mittels des Verfahrens in der abgereicherten Flüssigkeit abgereichert werden. Beispiele hierfür sind Eisen, Mangan, Chlor, Sulfat, Nitrat, Bakterien, Carbonat, gelöstes Kohlenstoffdioxid und andere Moleküle, Ionen oder Partikel. Mit anderen Worten wird in dem Verfahren die Trägerflüssigkeit bereitgestellt, die Moleküle, Ionen oder Partikel aus dem Primäreis bzw. der Primärflüssigkeit abführt, indem diese in der Trägerflüssigkeit gelöst sind oder mit ihr ausgeschwemmt werden. Die abgereicherte Flüssigkeit entspricht in einem einfachen Beispiel dem entsalzten Wasser. Die abgereicherte Flüssigkeit ist demnach mit anderen Worten eine von den Molekülen, Ionen oder Partikeln ganz oder im Wesentlichen gesäuberte bzw. gereinigte Flüssigkeit.

Eine Anlage zur Bereitstellung von abgereicherter Flüssigkeit, insbesondere ionenabgereichertem Trinkwasser, aus einer Primärflüssigkeit, umfasst einen Kristallisator mit einer Kristallisatorkammer und einer Kühleinrichtung zur Überführung der Primärflüssigkeit in die feste Phase und somit zur Bereitstellung von Primäreis aus der Primärflüssigkeit in der Kristallisatorkammer, eine Presseinrichtung zum Pressen des Primäreises und somit zum Trennen der abgereicherten Flüssigkeit von der angereicherten Trägerflüssigkeit. Mit anderen Worten wird beispielsweise in nicht abschließender Aufzählung eine Abreicherungsanlage bzw. eine Entsalzungsanlage oder, im Konkreten, eine Meerwasserentsalzungsanlage allgemein als Anlage bezeichnet.

Die Anlage kann mit einem Kältemittel zum Entziehen von Wärmeenergie aus der Primärflüssigkeit ausgerüstet sein.

Die Kristallisatorkammer der Anlage kann ferner in Doppelwandbauweise ausgeführt sein. Beispielsweise kann hierbei das Kältemittel in einer Außenschale um die in einer Innenschale angeordnete Primärflüssigkeit herum angeordnet sein und der Primärflüssigkeit Wärmeenergie entziehen. Zur Verbesserung des Wärmeabtransports kann das Kältemittel umgewälzt werden, beispielsweise mittels einer Umwälzpumpe bzw. einem Umwälzsystem.

Die Presseinrichtung der Anlage wird derart angeordnet, dass das Pressen des Primäreises in der Kristallisatorkammer stattfindet. Mit anderen Worten wird die Presseinrichtung in der Kristallisatorkammer angeordnet.

Die Presseinrichtung wird so ausgestaltet, dass das Eis möglichst wenig von der Pressung zum Schmelzen gebracht wird, jedoch das zwischen dem Eis eingeschlossene Zwickelwasser bzw. die angereicherte Flüssigkeit aus dem Eis vermittels Pressung ausgetrieben wird.

Die Presseinrichtung kann ferner eine Zwangsfördereinrichtung zur Verschiebung bzw. Lageänderung des Primäreises innerhalb der Kristallisatorkammer aufweisen. Die Zwangsfördereinrichtung kann insbesondere in nicht abschließender Aufzählung eine Förderschnecke, ein Extruder, eine Stopfschnecke oder eine Transportschnecke sein oder Walzen oder eine Bandfördereinrichtung umfassen.

in einer Aspekt kann Zwangsfördereinrichtung das Primäreis aus der Kristallisatorkammer abführen, so dass der Pressvorgang außerhalb der Kristallisatorkammer stattfindet. In diesem Beispiel ist die Presseinrichtung umfassend die Zwangsfördereinrichtung nicht auf die Kristallisatorkammer beschränkt. Dies soll nicht ausgeschlossen sein und kann ggf. für Großfertigungsanlagen vorteilhaft sein. Für kompakte isolierte Anlagen erscheint demgegenüber die kombinierte Kristallisator- und Presskammer, bei welcher der Eisbildungsund Pressvorgang in demselben Behälter stattfindet, vorteilhaft.

Um vorgenannten Schwierigkeiten der Trennung von Eis und Wasser zu entgehen und Trinkwasserqualität zu erhalten, kann das Eis also mittels Pressen bzw. eines definierten Pressvorgangs des Eises bearbeitet werden. Der Pressvorgang basiert auf experimentell und nach Vorkenntnissen eingestellter Zeitkinetik und Druckverlauf, wie später noch ausführlicher beschrieben wird. Gleichzeitig verbessert es den Trennvorgang, eine Entwässerung des Eises durch geschickt angeordnete Entwässerungskanäle anzulegen. Der Druck beim Pressen ist nicht allein ausschlaggebend für das Entwässerungsverhalten und damit die Entionisierung. Vielmehr ist es vorteilhaft, die Pressung gleichmäßig erfolgen zu lassen, um dem Zwickelwasser hinreichend Gelegenheit zu geben, aus dem Eis-Zwickelwasserverbund herauszufließen. Auch ist es günstig, die plastische Verformbarkeit des Eises unter Druck zu nutzen. Damit können Hohlräume bzw. Zwickel noch besser geschlossen werden.

Im Vergleich zur Filtrierung oder zur Zentrifugation ist für das Pressen ein einfacher apparativer Aufbau möglich. Insbesondere werden keine schnelllaufenden Apparateteile benötigt, die zu erhöhten Sicherheitsanforderungen führen und auch einen erhöhten Verschleiß bedingen können. Dies spart zum einen Kosten und zum anderen fehleranfällige Bauteile ein. Außerdem entfallen unnötige Stoffführungen in der Anlage, die speziell bei Feststoffen unerwünscht sind und bei Eis als zu transportierendes Medium zu einem Wärmeeintrag und dem Verlust von Produkt führen würden.

Besonders vorteilhaft an dem Verfahren ist, dass insbesondere ungefilterte Primärflüssigkeit direkt verarbeitbar ist. Das bei gleich welcher Filtration auftretende mögliche Verstopfen der Anlage bzw. eine immer wiederkehrende Reinigung entfällt in dem hier vorgeschlagenen Verfahren bzw. vereinfacht sich erheblich, da eine erheblich größere Maschenweite eines Siebes eingesetzt werden kann, sollte auf ein Sieb nicht ganz verzichtet werden wollen. Eine Verstopfung oder ein Zuwachsen von Poren in Membranen fällt also insbesondere nicht an, weil auf Membrane oder andere engporige Filtrationshilfsmittel verzichtet werden kann.

Die Zwangsfördereinrichtung kann in vorteilhafter Weise geschweißt gefertigt sein oder aus Vollmaterial gedreht werden.

Die Zwangsfördereinrichtung weist in einer vorteilhaften Ausführung Edelstahl oder hochfestes Aluminium oder Kunststoff auf oder ist aus Edelstahl, hochfestem Aluminium oder Kunststoff zumindest im Wesentlichen oder im Ganzen gefertigt.

Die Presseinrichtung kann in einer weiteren Ausführung einen Unterdruckerzeuger zur Erzeugung eines Unterdrucks in der Kristallisatorkammer umfassen. Wird die Kristallisatorkammer mit einem Druckgradienten beaufschlagt, der einen Druckgradienten, also insbesondere eine Sogkraft, in Richtung des Auslasses erzeugt, so kann das Primäreis in Richtung des Auslasses gefördert werden. In vorteilhafter Weise kann die Presseinrichtung eine flexible Sperrschicht aufweisen, die beispielsweise gegenüberliegend zu dem Auslass angeordnet werden kann. Die flexible Sperrschicht kann in einer Ausführungsform eine diffusionsgehemmte Folie sein, die entweder in der Kristallisatorkammer eingesetzt ist und die Kristallisatorkammer in zwei Unterkammern trennt, oder über einen ansonsten offenen Bereich der Kristallisatorkammer gespannt wird um selbige zu verschließen. Wird die Kristallisatorkammer mit dem Unterdruck beaufschlagt, presst die flexible Sperrschicht das Primäreis bzw. den Primäreisbrei in Richtung des Druckgradienten, also bevorzugt in Richtung des Auslasses.

So kann es sinnvoll sein, gleichzeitig Überdruck und Unterdruck (im Vergleich zum Atmosphärendruck) an unterschiedlichen Stellen der Anlage anzulegen.

In noch einer Ausführungsform kann die Presseinrichtung zumindest eine drehbare Presswalze oder zwei benachbart angeordnete gegenläufige Presswalzen zum Pressen des Primäreises umfassen. Die drehbaren Presswalzen pressen das Eis bei ihrer Rotation und trennen dabei die angereicherte Flüssigkeit (ggf. in Form von Eisbrei oder Eis) von der abgereicherten Flüssigkeit.

Die Presswalze kann eine elastische Presswalze sein, beispielsweise eine aufgeblasene Presswalze in Zylinderform.

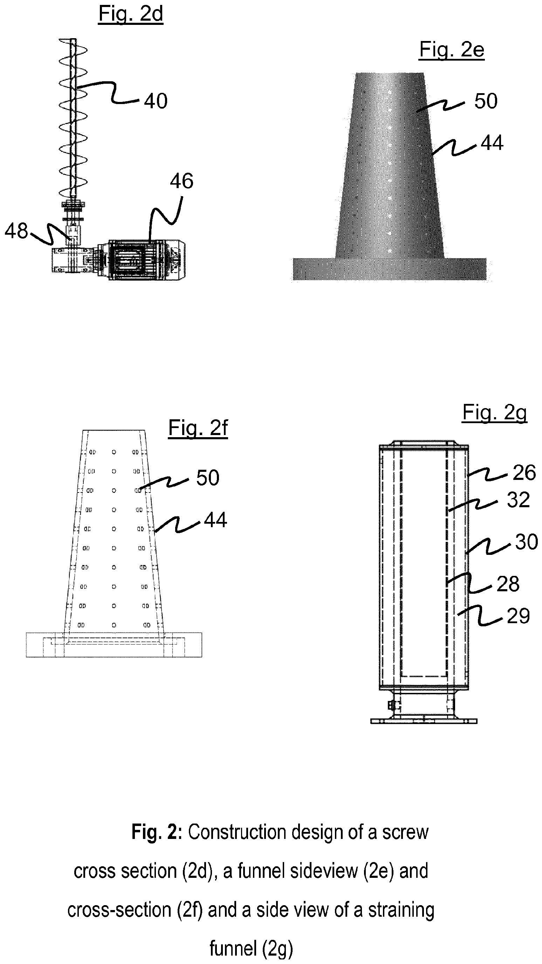

Vor dem Austritt ist bevorzugt ein Gegenpresselement angeordnet, wobei die Zwangsfördereinrichtung hergerichtet und angeordnet ist, das Primäreis gegen das Gegenpresselement zu pressen, um somit die angereicherte Flüssigkeit von dem abgereicherten Eis zu trennen. Das Gegenpresselement kann auch direkt in den Auslass übergehen, also einstückig mit dem Auslass ausgebildet sein. Beispielsweise kann das Gegenpresselement mit Auslass ein an beiden Enden offen ausgebildeter Kegelstumpf sein, vgl. Fig. 2f. Im weiteren Verlauf der Beschreibung wird ersichtlich werden, dass als Gegenpresselement viele Elemente geeignet und technisch umsetzbar sind, die zusammen mit einer äußeren Druckbeaufschlagung (beispielsweise erzeugt durch den Schneckenförderer) geeignet sind, das Eis mit einem Druck zu beaufschlagen und so die angereicherte Flüssigkeit von der abgereicherten Flüssigkeit bzw. den Eiskristallen zu trennen.

Eine hier bevorzugte Ausführungsform des Gegenpresselementes ist dergestalt, dass das Gegenpresselement einen über zumindest eine Erstreckungsrichtung sich verjüngenden oder verengenden Querschnitt aufweist.

Das Gegenpresselement selbst kann Öffnungen aufweisen zum Auslass oder zur Ableitung der angereicherten Flüssigkeit.

Die Kristallisatorkammer kann einen Austritt bzw. Ausgang umfassen. Der Austritt kann in vorteilhafter Weise einen geringeren Durchmesser als das in der Kristallisatorkammer mittels des Verfahrens bzw. der Anlage bereitgestellte Primäreis aufweisen und/oder wobei das Primäreis mittels der Zwangsfördereinrichtung in Richtung des Austritts bewegt oder verschoben wird.

In einer weiteren bevorzugten Ausführungsform weist die Zwangsfördereinrichtung ein Innenteil auf, welches hohl gestaltet ist. Besonders bevorzugt ist das Innenteil als Hohlwendel ausgestaltet.

Die Oberfläche der Zwangsfördereinrichtung kann eine Oberflächenvergütung aufweisen, also mit anderen Worten eine Oberflächenbeschichtung oder Oberflächenbehandlung zur Verbesserung der Verschiebung bzw. Bewegung des Primäreises.

Ferner kann die Oberfläche der Zwangsfördereinrichtung Perforationen aufweisen zur Verbesserung des Austrags der angereicherten Trägerflüssigkeit.

Die Kühleinrichtung weist beispielsweise eine Kompressionskältemaschine auf. Hierdurch kann die Effizienz der Gesamtanlage weiter gesteigert werden.

Zum Einstellen des Zuflusses von Primärflüssigkeit in die Kristallisatorkammer kann die Anlage in vorteilhafter Weise mit einem Zuflussregler ausgerüstet sein. Der Zuflussregler regelt bevorzugt in Abhängigkeit von der produzierten Menge abgereicherter Flüssigkeit. In einer Ausführungsform kann der Zuflussregler ein Schwimmkörper sein.

Die Kristallisatorkammer kann bevorzugt eine Abflussöffnung aufweisen zum Auslassen der angereicherten Trägerflüssigkeit aus der Kristallisatorkammer. Ein Abfluss der angereicherten Trägerflüssigkeit kann beispielsweise durch eine Leitfähigkeitsmessung ermittelt werden.

Der Kristallisator kann ferner zumindest einen Turbulator aufweisen. Mittels des Turbulators kann der Wärmeübergang verbessert werden. Beispielsweise kann der Turbulator in der Kristallisatorkammer angeordnet sein um in Kontakt zur Primärflüssigkeit zu treten. Der Turbulator kann alternativ oder kumulativ in der Kühleinrichtung angeordnet sein zur Verwirbelung der Kühlflüssigkeit. Es können auch mehr als ein Turbulator in der Anlage eingesetzt sein, beispielsweise ein erster und ein zweiter Turbulator, oder mehr.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

- Fig. 1: ein Ausführungsbeispiel einer Entionisierungseinheit einer Anlage,
- Fig. 2a: Außenansicht einer Kleinanlage,
- Fig. 2b: Schnittansicht der Kleinanlage,
- Fig. 2c: Beispiel eines Zwangsförderers,
- Fig. 2d: Schnittmodell eines Zwangsförderers,
- Fig. 2e: Beispiel eines Gegenpresselements,
- Fig. 2f: Schnittmodell eines Gegenpresselements,
- Fig. 2g: Schnittmodell eines Kristallisators,
- Fig. 3a: konzeptionelle Ausführung einer Anlage,
- Fig. 3b: weitere konzeptionelle Ausführung einer Anlage,
- Fig. 4: Beispiel einer Oberfläche des Kristallisators,
- Fig. 5: schematischer Versuchsaufbau einer Trinkwasserentsalzungsanlage,
- Fig. 6: Schnittansicht einer beispielhaften Trinkwasserentsalzungsanlage,
- Fig. 7a: Presseinrichtung mit Walzen,
- Fig. 7b: wie Fig. 7a als Schnittansicht,
- Fig. 7c: Presseinrichtung mit perforierten Walzen,
- Fig. 7d: wie Fig. 7c als Schnittansicht,
- Fig. 8: Presseinrichtung mit Bandförderelement

### Detaillierte Beschreibung der Erfindung

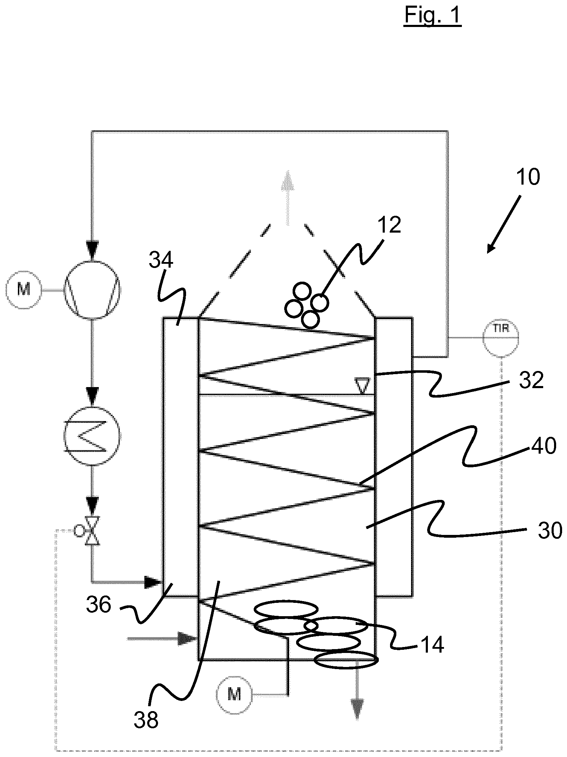

In Fig. 1 ist ein Ausführungsbeispiel einer Entionisierungseinheit einer Anlage 10 dargestellt. Eis 12 wird in einer Eisaufnahme oder Kristallisator 30, d.h. z.B. in einem Behälter, einem Rohrreaktor oder allgemein einem Aggregat, welches geeignet ist, insbesondere über eine wärmeabführende Wand 32, das Produkt abzukühlen, typischerweise aus einer Flüssigkeit 14 erzeugt. Mittels einer an der Wandung 32 entlanglaufenden Schnecke 40, oder einem Wischer, einem Schaber oder alternativ durch geeignete Auslegung einer Strömungsführung entfernt und zum Austrag gefördert. Im Doppelmantel 34 der Wandung 32 oder auch der Druck aufbauenden Schnecke 40 wird z.B. Kältemittel 36 eingespritzt, welches beispielsweise mittels Verdampfung dem im Inneren 38 der Eisaufnahme 30 befindlichen Primärflüssigkeit, z.B. Meerwasser, die Wärme entzieht. Es können aber auch andere Methoden der Kältegewinnung bzw. Wärmeübertragung eingesetzt werden, z.B. der Betrieb über eine Sole oder ein übliches, dem Fachmann bekanntes Kältemittel. Die im Aggregat verdampfende Flüssigkeit ist nur als Ausführungsform zu sehen.

Die sich drehende Schnecke 40 ist als Zwangsförderer ausgebildet. Mit anderen Worten wird das Eis 12 automatisch von der sich drehenden Schnecke 40 mitgetragen und zum Austrag 42 befördert. Am Austrag 42 ist ein Gegenpresselement 44 in Form einer perforierten Verjüngung 44 angeordnet, die dazu führt, dass das Eis 12 gepresst und gleichzeitig entwässert wird. Auch die Perforierung bzw. die perforierte Verjüngung 44 ist nur als Ausführungsform zu sehen. Es können beispielsweise auch Schlitze, Netze, Sintermetalle sowie weitere Ausführungsformen, die die Grundidee der Trennung von Feststoff 12 und Fluid 14 unterstützen, angewendet werden. Das ausgepresste Salzwasser 14 kann bei Bedarf in den Prozess zurückgeführt werden, bis die gewünschte Aufkonzentrierung erreicht ist. Das Eis 12 kann anschließend durch Aufschmelzen in die flüssige Form überführt und beispielsweise in einen Behälter zur Lagerung (von Trinkwasser) gefördert werden. Die Kälteenergie soll beim Aufschmelzen nach Möglichkeit beispielsweise mittels Wärmetauscher zurückgewonnen werden.

Um den Durchsatz einer solchen Anlage zu variieren, kann bei der Auslegung der Durchmesser bzw. die Länge des Behälters bzw. der Eisaufnahme 30 und im Wesentlichen somit die Wärmeübertragungsfläche verändert werden. Weiterhin führt eine Veränderung der Drehzahl der Schnecke 40 zu einer Veränderung der Turbulenz, also beispielsweise führt typischerweise eine Erhöhung der Schneckendrehzahl zu einer Intensivierung der Turbulenz und somit zu einem besseren Wärmeübergang im inneren des Behälters 30. Eine weitere Stellgröße ist die Kühltemperatur. Die stärkere (Unter-)Kühlung der Wand 32 führt zu einem höheren Temperaturunterschied zwischen Wand und Fluid und damit zu einem stärkeren Wärmeentzug. Mit einer stärkeren Kühlung kann die Eisproduktion erhöht werden. Gerade dieser Parameter kann als Regelgröße für den Durchsatz herangezogen werden. In einer Ausführungsform soll die Anlage 10 nämlich mit Solarenergie aus photovoltaischen Halbleitern gespeist werden.

Der schwankende Anfall der Solarstrahlung führt dann zu einer schwankenden Ausgabeleistung der Wärmepumpe, die zur Rückgewinnung der Wärme und Kälte dient. Bei höherer solarer Einstrahlung wird mehr Eis erzeugt als bei geringer Einstrahlung. Unterhalb einer Untergrenze kann die Anlage abgeschaltet werden, wenn die Produktion zu gering ist. Modellhaft kann man sagen, dass das erzeugte Eis 12 oder Süßwasser einen Energiespeicher für die Solarenergie bildet. Ein elektrischer Speicher wird in einer bevorzugten Ausführungsform nicht benötigt. Dies ist bei den derzeitigen Kosten für einen Batteriespeicher als Vorteil anzusehen hinsichtlich, so dass die Entstehungskosten der abgereicherten Flüssigkeit, also insbesondere des Trinkwassers, gering gehalten werden. Es ist jedoch durchaus möglich, dass mit weiter sinkenden Kosten bzw. Verbesserungen bei Batteriespeichern es wirtschaftlicher wird, solche doch einzusetzen, um beispielsweise den Betrieb über Nacht bzw. einen erweiterten Betrieb zu ermögilchen, weshalb dies nicht ausgeschlossen sein soll.

In einer speziellen Ausführungsform kann auch Kälteenergie in hochkonzentrierter Salzsole gespeichert werden, die dann z.B. in einem Bereich von minus 15°C gefriert. Durch Zuführung dieser Sole in die Eis-Erzeugungsanlage kann also auch ohne Solarstrahlung gekühlt werden, z.B. um die Laufzeit der Anlage über den Tagesverlauf zu verlängern. Aber auch andere Speicherformen können in vorteilhafter Weise mit der Anlage kombiniert werden, um die Tagesbetriebszeit der Anlage zu verlängern.

In der Anlage 10 können unter anderem die folgenden vorteilhaften Weiterbildungen realisiert werden:
Der Behälter des Kristallisators 30 kann doppelwandig 34 ausgeführt werden, damit das Kältemittel 36 getrennt vom Meerwasser 12, 14 geführt wird. Dies kann z.B. durch die Verbindung zweier Rohre, aber auch durch das Aufbringen einer Rohrwendel oder in anderer Weise erreicht werden.

Das Kältemittel 36 kann entweder direkt verdampft, andererseits aber auch in einem separaten Verdampfer ein weiteres Kühlmittel herunterkühlen, welches anschließend als Kältemittel verwendet wird.

Die Zwangsförderung der Wasser/Eismischung wird bevorzugt als Schnecke realisiert, welche geschweißt, aber auch aus kompletten Material gedreht sein kann. In der Regel wird diese aus Metall (Edelstahl) gefertigt sein, kann aber auch aus hochfestem Aluminium oder Kunststoff oder einem anderen Material gearbeitet werden. Das Prinzip hängt auch nicht an der Schneckenform. Es können auch andere Formen von Zwangsförderern eingesetzt werden.

Die Pressung des Eises kann z.B. anhand einer Verjüngung am Austritt des Kristallisators erfolgen. Das Gegenpresselement kann z.B. als Matrize oder als Konus gefertigt sein. Alternativ kann die Schnecke so ausgelegt sein, dass eine axiale, radiale oder multivariante Pressung vorliegt und die zwangsweise Nutzung einer Matrize oder eines Konus entfällt. Weitere Verbesserungen der Schnecke können der Zerkleinerung bzw. der weiteren Förderbarkeit des Eisgemisches dienen. Die Pressung könnte auch getaktet erfolgen, indem sich die Austrittsöffnung periodisch oder in anderem zeitlichen Rhythmus verjüngt und erweitert.

Der Pressvorgang kann auch durch Unterdruck oder Vakuum erfolgen. Hier kann beispielsweise eine großflächig aufgelegte diffusionsgehemmte Folie durch einen Unterdruck angezogen und in einem Bereich bis zu etwa 10 to/m² auf das Wasser-Eis-Gemisch gepresst werden, was besonders preiswerte Ausführungsvarianten erlaubt.

Die diffusionsgehemmte Folie bzw. allgemein ein flexibles Presselement kann auch ohne Unterdruck eingesetzt werden, um das Eis zu pressen. Beispielsweise kann die Folie von einem Spannhalter gehaltert und für eine Pressung auf das Eis gespannt werden, so dass durch die Spannkraft auf das Eis eine Presskraft wirkt. Die Folie kann auch mit der Rollenpressvorrichtung bzw. der zumindest einen Walze und den anderen genannten Pressvorrichtungen zusammenwirken.

Die Welle der Schnecke kann zusätzlich als Hohlwendel ausgeführt werden um eine Wärmeintegration zu ermöglichen.

Um einem Ausweichen des Eises entgegenzuwirken kann die Oberfläche der Schneckenwendel speziell behandelt werden um eine erhöhte Rauheit und somit eine größere Mitnahmewirkung aufzuweisen. Weiterhin können die Wendeln Abflussverbesserer aufweisen, also z.B. perforiert sein, damit das im Eis befindliche Zwickelwasser auf dem Weg zum Austrag in entgegengesetzter Richtung abfließen kann.

Die zu entziehende Wärme wird durch eine Kompressionskältemaschine erzeugt. Im Sinne der Energieeffizienz kann diese einen besonders hohen COP aufweisen, sofern sie beispielsweise durch regenerative Energiequellen wie Photovoltaik oder Windkraft gespeist wird

Es kann eine automatische Wasserzufuhr vorgesehen sein, welche durch einen Schwimmkörper erreicht oder durch eine automatisierte Einheit gesteuert wird.

Der Abfluss des Konzentrats, also der angereichten Flüssigkeit, kann durch einen separaten Anschluss erfolgen und kann z.B. durch Leitfähigkeitsmessung ermittelt werden.

Eine Verbesserung des Wärmeübergangs sowohl im Inneren des Kristallisators, als auch im Bereich des Kühlmittels kann durch weitere Einbauten durch Vergrößerung der Turbulenz oder der Wärmeübertragungsfläche erreicht werden.

Die Abreicherung bezieht sich hierbei auf gelöste und disperse Verschmutzungen jeglicher Art. Beispielhaft sind die Abreicherung gelöster Salze im Meerwasser zur Erzeugung von Trinkwasser und die Aufreinigung von im Boden, durch beispielsweise Düngung und Herauslösung aus Kalkgesteinen, vorhandenen Ionen zur Herstellung von Brauwasser oder Nutzwasser in der Industrie allgemein benannt. Es konnte gezeigt werden, dass auch Eisen, Mangan, Chlor, Sulfat, Nitrat, Bakterien, Carbonat, gelöstes CO2 und diverse andere Moleküle, Ionen oder Partikel abgereichert werden.

Im Folgenden werden Ausführungsformen für den energiesparenden Betrieb vorgestellt.

Es wurde bereits ausgeführt, dass ohne Wärmerückgewinnung die Verdampfung von einem m³ Meerwasser ca. 600 kWh benötigt, im Vergleich hierzu das Gefrieren derselben Menge Meerwasser eine thermische Energie von ca. 80 kWh. Dadurch ist das hier vorgeschlagene Verfahren prinzipiell energiesparender als einstufige Verdampfung.

Im vorgeschlagenen Verfahren kann durch Wärmerückgewinnung in vorteilhafter Weise Energie zurückgewonnen werden. Dies wird nachfolgend erläutert.

Warmes (z.B. 20°C [293 K]) Meerwasser wird über einen Gegenstromwärmetauscher zur Anlage gepumpt. Über eine Wärmepumpe wird es bei z.B. minus 4°C [269 K] zum Gefrieren gebracht und in der Anlage in Salzlauge und salzfreies Eis getrennt. Mit der Abwärme der Wärmepumpe wird das Eis aufgetaut und auf ca 2°C [275 K] erwärmt. Auch die kalte Lauge wird auf 2°C [275 K] erwärmt. Sowohl Süßwasser als auch Lauge werden über getrennte Gegenstromwärmetauscher geführt und kühlen das zufließende Meerwasser auf ca. 4°C [277 K] ab. Die wegfließenden Fluidströme erwärmen sich in diesem Fallbeispiel auf 18°C [291 K].

Damit muss die Wärmepumpe nur eine Kühlleistung aufbringen, die eine Abkühlung der Primärflüssigkeit um 8 Kelvin bewirkt.

Wärmepumpen erreichen umso höhere Leistungszahlen (COP Coefficient of Performance) je kleiner der Temperaturhub ist.

Im Hausbereich werden COPs von ca 4 bei Temperaturhüben von 8°C auf 40°C also 32 K erreicht. Damit ist es möglich, in der erfindungsgemäßen Anlage COPs von bis zu 16 und mehr bei einem Temperaturhub von 8 K zu erreichen.

Dies bedeutet, dass als Energieverbrauch nur 1/16 von 80 KWh als elektrische Leistung benötigt werden, also ca. 5 KWh pro m³ Süßwasser.

Selbst wenn nur ein COP von 10 erreicht wird, ist die Anlage 10 damit sehr energiesparend.

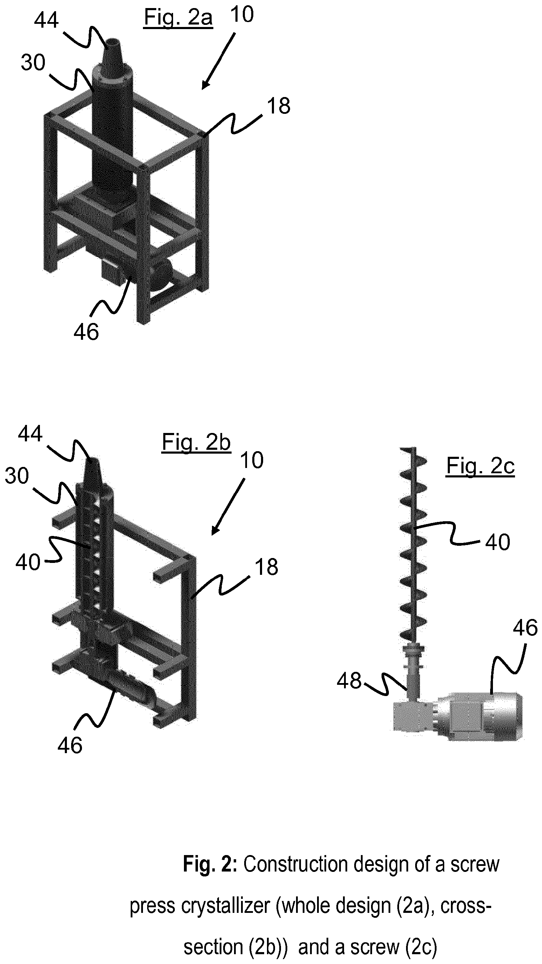

Die Fig. 2 zeigen ein Konstruktionsmodell einer Anlage. Fig. 2a zeigt dabei eine Außenansicht und Fig. 2b einen Querschnitt durch die Anlage 10 mit Behälter 30. Besonders an dieser Ausführungsform ist, dass sich Eis 12 auf der Innenseite bzw. Wandung 32 des Behälters 30, der zugleich die Schraubeneinheit 40 beherbergt, wachsen kann. Das Eis 12 wird dort abgetragen und zu einem Ende, das in den Figs. 2a, 2b als "oberes" Ende gezeigte Ende, transportiert. Durch den erzwungenen Transport wird das Eis 12 in den konischen, perforierten Trichter 44 gepresst. Das Pressen des Eises 12 wiederum führt zu einer Trennung von Eis 12 und angereicherter Flüssigkeit 14. Das Eis 12 kann dann gesammelt und wieder geschmolzen werden, um Trinkwasser zu erhalten. Zum Antrieb der im Inneren des Kristallisators 30 angeordneten Schraube 40 ist die Antriebseinheit 46 vorgesehen. Die gezeigte Ausführung ist auf einem Trag- und Montagegestell 18 für den leichteren Transport und die erhöhte Modularität montiert. Die Größe der Anlage 10 kann einfach skaliert werden.

Vorteilhaft an der senkrechten Anordnung der Anlage bzw. des Kristallisators 30 ist, dass das erzeugte Eis auf der Flüssigkeit bzw. dem Brei aufschwimmt und oben weiterbehandelt werden kann. Anstelle einer einzigen durchgehenden Schnecke im Kristallisator ist es daher auch möglich, im Inneren des Kristallisators 30 andere Mittel einzusetzen, die Eis bereitstellen - wie Schaber, die Eis von der Wandung abkratzen - und das Eis selbsttätig aufschwimmen zu lassen. Das aufgeschwommene Eis kann dann von einer Fördereinrichtung 40 aufgenommen und im weiteren Verlauf gepresst werden, beispielsweise mittels eines Gegenpresselementes 44.

Fig. 2c und 2d zeigt eine Ausführungsform eines Zwangsförderers bzw. der Schraubeneinheit 40 mit angeflanschter Antriebseinheit 46, beispielsweise einem Elektromotor. Die Schraubeneinheit 40 ist hergerichtet, die Eisschicht 12 auf der Innenfläche 32 des Behälters 30 abzutragen und zu dem Trichter 44 zu bewegen. Beispielsweise kann der Zwangsförderer 40 aus Edelstahl hergestellt sein. Um die Schraube 40 mit dem Motor 46 zu verbinden und auftretende Kräfte abzuleiten können ist eine Antriebskupplung 48 angesetzt. Die Antriebskupplung 48 kann beispielsweise ein axiales und zwei radiale Rollenlager sowie eine Kupplung umfassen. Der Motor 46 aus dem Beispiel erzeugt ein maximales Drehmoment von 250 Nm und eine maximale Rotationsgeschwindigkeit von 60 UPM. Der Fachmann wird mit dem in dieser Anmeldung beschriebenen Wissen über den Pressvorgang in die Lage versetzt, eine Anlage derart zu skalieren, dass er für die entsprechende Anlagengröße einen entsprechend dimensionierten Antrieb einzusetzen vermag. Die vorgenannten Daten über Drehmoment und Rotationsgeschwindigkeit sind daher nur beispielhaft zu verstehen und nicht im Sinne einer bevorzugten Größe.

Die Schraubeneinheit kann aus rostfreiem Stahl hergestellt werden, um einerseits die Presskraft übertragen zu können, andererseits um der ionen- bzw. salzhaltigen Umgebung zu widerstehen. Auch eine Herstellung aus Titan oder Kunststoff ist vorteilhaft, wobei jedes geeignete Material in Frage kommt. Auch die Kosteneffizienz spielt eine Rolle.

Fig. 2e zeigt eine Seitenansicht und 2f eine Schnittansicht eines Trichters 44. Der Trichter 44 ist hergerichtet und geformt, den Eisbrei 12, 14 zu pressen. Etwa 30% des Breis stellen typischerweise pures Eis dar, 70% konzentrierte angereicherte Flüssigkeit 14. Der Trichter 44 ist so gebaut, dass dem Primäreisgemisch eine vordefinierte Trennungszeit mit einer bestimmbaren Volumenänderung des Eisvolumens vom Eintritt des Trichters 44 bis zum Auslass vorgegeben werden kann, wenn der Primäreisbrei von dem Zwangsförderer 40 in Richtung des Trichters 44 gefördert wird. Beispielsweise kann bei guter Auslegung die angereicherte Flüssigkeit den Trichter 44 durch seitliche Löcher verlassen und beispielsweise im Gegenstrom zum Eis 12 fließen. Die Gegenpresseinheit 44 kann beispielsweise aus Edelstahl oder aus Aluminium hergestellt sein. Es ist dem Fachmann jedoch klar, dass jedes geeignete Material zur Herstellung herangezogen werden kann, um der Anpresskraft der Schraubeneinheit 40 zu widerstehen.

Fig. 2g zeigt eine Schnittansicht einer Ausführungsform eines Kristallisators 30. Ein Kühlbereich 28 erstreckt sich über praktisch die gesamte innere Oberfläche 32 des Kristallisators 30. Der Kühlbereich 28 ist doppelwandig ausgelegt. Zwischen der Außenwand 26 und der Innenwand 32 ist ein definiertes Kühlvolumen 29 eingeschlossen, in welchem eine Kühlflüssigkeit gepumpt werden kann oder in welchem der Verdampfer der Wärmepumpe angeordnet sein kann. In einer vorteilhaften Ausführungsform werden Außenwand 26 und Innenwand 32 gebildet, indem zwei unterschiedlich durchmessende Rohre ineinandergeschoben werden und mit Abstandshaltern versehen werden, um einen vordefinierten Abstand zueinander einzuhalten. Beispielsweise kann die innere Wand 32 dicker als die äußere Wand 26 gestaltet sein, insbesondere mehr als doppelt so dick, um die im Innenraum des Kristallisators 30 auftretenden Kräfte verformungsfrei aufzunehmen.

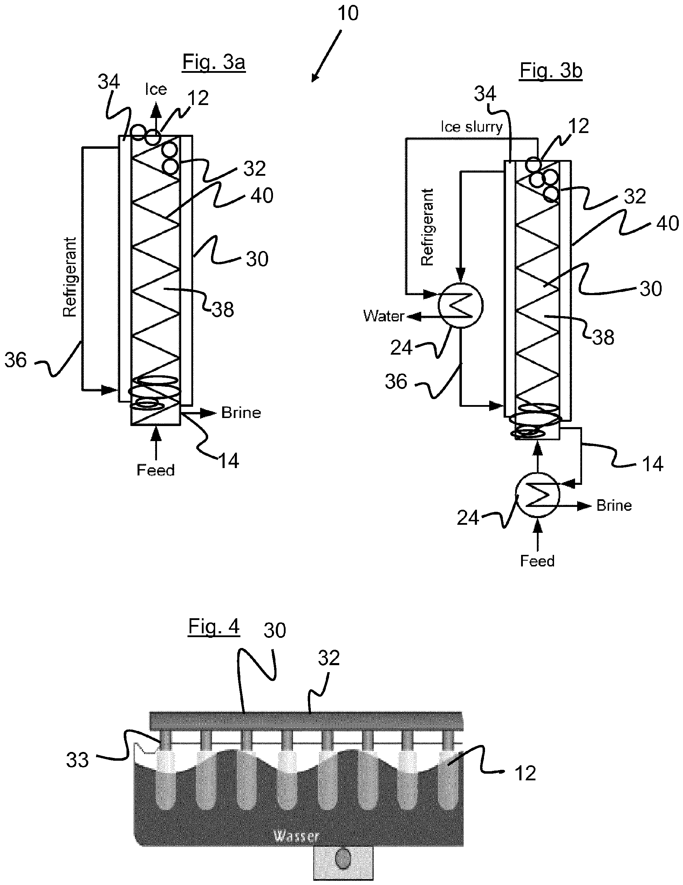

Figuren 3a und 3b zeigen zwei weitere konzeptionelle Ausführungen eines Kristallisators 30. Primärflüssigkeit wird in der jeweiligen Darstellung von unten zugeführt. Angereicherte Flüssigkeit 14 wird beispielsweise mittels Fluidführungen in der Schraube 40 nach unten gefördert und abgeleitet. Das Kühlmittel 36 zirkuliert in der Doppelwand 34. Fig. 3b zeigt eine vorteilhafte Ausführungsform mit zwei Wärmetauschern 24, beispielsweise Plattenwärmetauscher. Das gewonnene Eis wird einem ersten Wärmetauscher 24 zugeführt, zu welchem gleichzeitig das Kältemittel 36 zugeführt wird. Dem Kältemittel wird dabei in dem ersten Wärmetauscher 24 Wärme entzogen, indem das abzuführende Eis geschmolzen und erwärmt wird. Beispielsweise kann das Kältemittel 36 vor Eintritt in den ersten Wärmetauscher 24 einen Kompressor durchlaufen, um den Wärmeübertrag weiter zu erhöhen. In einem zweiten Wärmetauscher 24 wird die Primärflüssigkeit vorgekühlt und Wärme an die abzuführende angereicherte Flüssigkeit 14 übertragen wird. Durch den Einsatz der beiden Wärmetauscher 24 werden die Temperaturunterschiede verkleinert und der COP kann in einem Beispiel mehr als verdoppelt werden, beispielsweise von 4 auf 9,85. Die zu dem Betrieb benötigte elektrische Leistung wird daher verringert.

Fig. 4 zeigt einen Versuchsaufbau, mit der der Einfluss einer Oberflächenänderung des Kristallisators 30 auf die Eisfront untersucht wurde. Stäbchenförmig ragen Ausstülpungen 33 aus der Wandung 32 hervor. Eis bildet sich auf der vergrößerten Oberfläche eine größere Menge Eis in derselben Zeit.

Es wurde ferner die Auswirkung von Impfkristallen auf die Eisbildung untersucht. Dabei wurde Impfkristalle in Form von Süßwassereis z.B. als Eiswürfel, Eiskugel, sog. "crushed Eis" oder zerkleinerte Eiswürfel in die Primärflüssigkeit gegeben, um die Keimstruktur, -masse und -größe der Eisbildung sowie die Zugabetemperatur zu untersuchen. Auch die Zugabe von Partikeln als Kristallisationskeime wurde untersucht, da erwartet wird, dass im Meerwasser auf natürliche Weise bereits verschiedenste Partikel enthalten sind.

Speiseöle bzw. synthetische Öle könnten ferner die Möglichkeit der direkten Kühlung eröffnen, indem unterkühlte Tröpfchen dieser Öle in die Primärflüssigkeit zur Kühlung und Eisbildung gegeben werden. Entscheidend ist, dass sich bei oder nach der Eisbildung das entsprechende Öl von dem erzeugten Eis und der angereicherten Flüssigkeit trennen lässt.

Auch eine veränderte Steigung der Zwangsfördereinrichtung 40 ist möglich. Beispielsweise kann am austreibenden Ende der Schnecke 40 eine geringere Steigung eingesetzt werden, so dass das in den Windungen der Schnecke getragene Eis bereits durch den sich verringernden Abstand zwischen zwei Steigungen geklemmt und schließlich gepresst wird, um das Eis weiter abzureichern.

Die Anlage 10 kann mit Druck- und/oder Temperatursensoren oder -reglern ausgerüstet sein und auch über eine Leitfähigkeitsmesssonde verfügen. Damit kann die Kälteverteilung in dem Kristallisator 30, aber auch der Wärmeerzeuger wie insbesondere die Wärmepumpe geregelt werden.

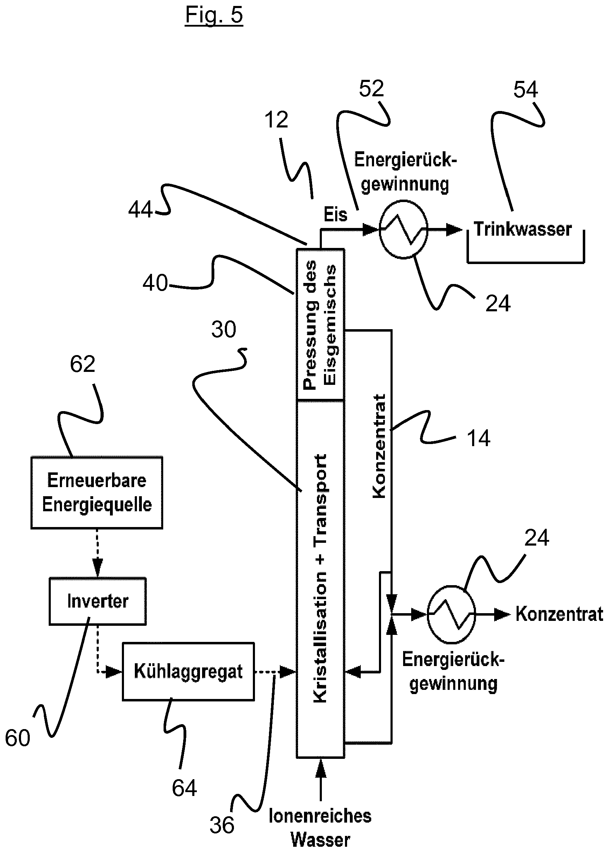

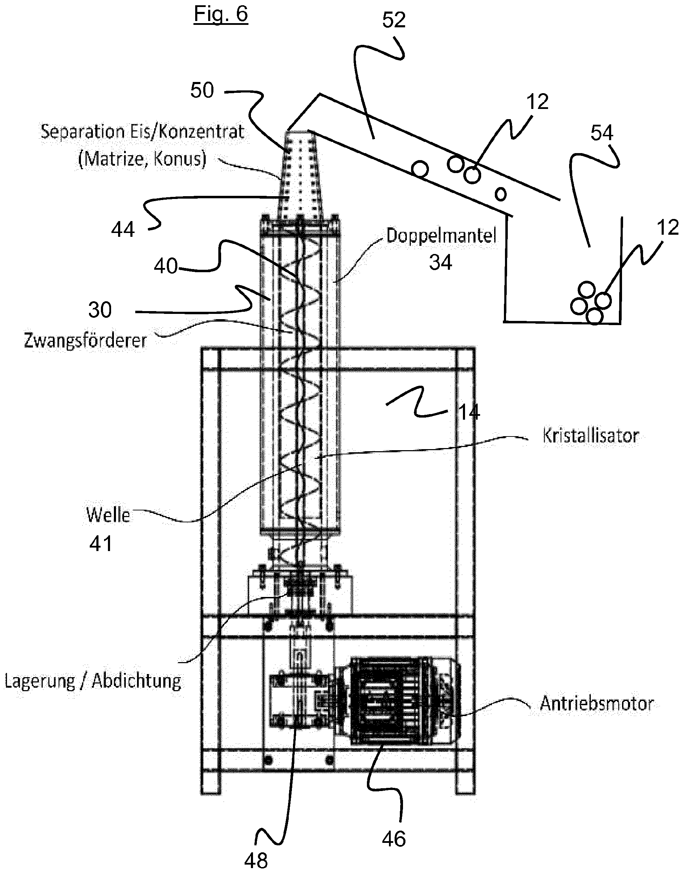

Fig. 5 zeigt einen schematischen Versuchsaufbau zur Erzeugung von Trinkwasser aus Salzwasser bzw. Meerwasser. In einen senkrecht angeordneten Kristallisator 30 wird Primärflüssigkeit zugeführt und in angereicherte und abgereicherte Flüssigkeit getrennt. Das abgereicherte Eis 12 wird über einen Ausgabeschacht 52 in einen Trinkwassersammelbehälter 54 (siehe auch Fig. 6) ausgegeben.

Eine Wärmepumpe 60, in diesem Fall ein Kompressoraufbau bzw. ein Inverter, stellt über ein Kühlaggregat 64 ein Kältemittel 36 bereit, welches über Anschlussleitungen in den doppelwandigen Kristallisator 30 geleitet wird. Die Wärmepumpe 60 wird in diesem Beispiel von einer Energiequelle 62, bevorzugt aus einer erneuerbaren Energiequelle wie Photovoltaik oder Windkraft, mit elektrischer Energie versorgt.

Fig. 6 zeigt eine weitere Schnittansicht eines Versuchsaufbaus zur Erzeugung von abgereicherter Flüssigkeit bzw. Eis 12. In dem Kristallisator 30 wird Primäreis von dem Wasser bzw. dem Eisbrei mittels des Zwangsförderers 30 in Richtung des Gegenpresselements 44 gefördert. Dabei treibt der Antrieb 46 über eine Kupplungseinheit 48 die Welle 41 des Zwangsförderers 30 an.

Vermittels des Anpressens an die innere Oberfläche des konisch geformten Gegenpresselements 44 wird weitere angereicherte Flüssigkeit aus dem Primäreis ausgetrieben. Das fertige Süßwassereis wird anschließend über einen Ausgabeschacht 52 in einen Sammelbehälter 54, also insbesondere einen Trinkwassersammelbehälter 54, ausgegeben.

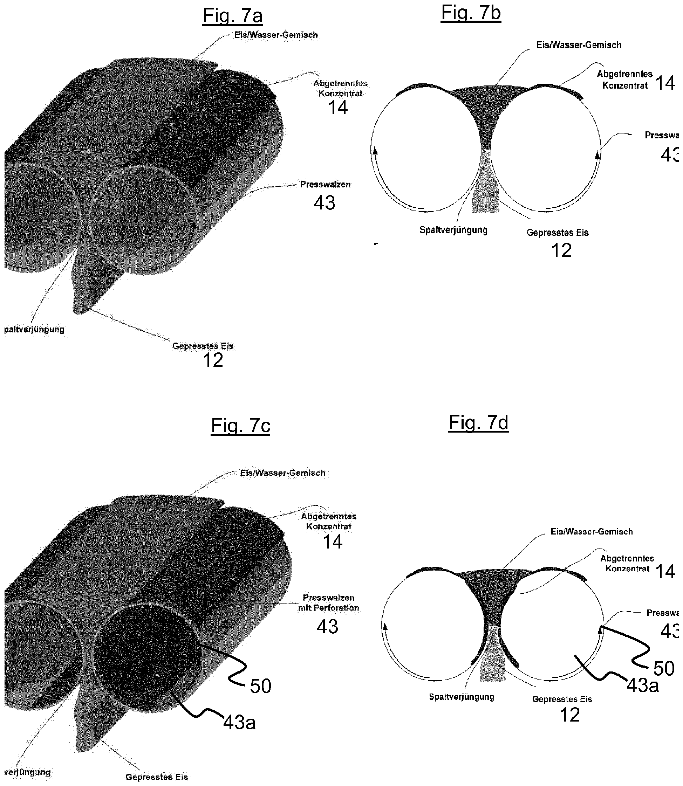

Fig. 7a bis 7d zeigen noch zwei Ausführungsformen einer Presseinrichtung 40. Bezug nehmend auf Fig. 7a wird ein Eisbrei bzw. Eis/Wasser-Gemisch auf zwei gegenläufige Presswalzen 43 gegeben. Beispielsweise kann der Eisbrei mit einer der vorangestellten Ausführungsformen eines Kristallisators bereitgestellt und vermittels einer Zwangsfördereinrichtung wie einer Schnecke oder einem Band das Primäreis aus dem Eisbrei bzw. der Primärflüssigkeit aufgelesen und auf die Walzen 43 gegeben werden.

Die Walzen 43 nehmen das Eis auf und beim Pressen des Eises trennt sich weitere angereicherte Flüssigkeit 14 aus dem Eis. Diese angereicherte Flüssigkeit 14 tritt seitlich aus dem Eis 12 aus und kann über die Walzen 43 ablaufen und aufgefangen werden. Fig. 7b zeigt denselben Aufbau wie Fig. 7a jedoch in Schnittansicht.

Bezug nehmend auf Fig. 7c ist ein zu Fig. 7a und 7b ähnlicher Aufbau zweier gegenläufig rotierender Presswalzen 43 gezeigt. Die Presswalzen 43 weisen jedoch zusätzlich Perforationen 50 in ihrer umlaufenden Oberfläche auf. Die angereicherte Flüssigkeit 14 kann daher auch in den Innenraum 43a der Presswalze eintreten und entlang der Erstreckungsachse der Presswalze ablaufen. Vermittels der Perforationen 50 bzw. Löcher kann ggf. noch mehr angereicherte Flüssigkeit aus dem Eis 12 abgeschieden werden. Fig. 7d zeigt den Aufbau wie Fig. 7c jedoch in Schnittansicht.

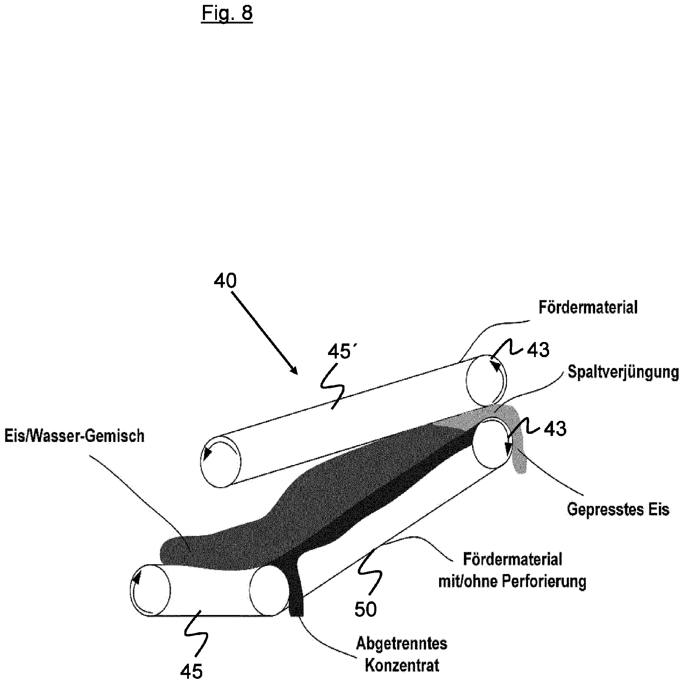

Fig. 8 zeigt schließlich noch eine Ausführungsform einer Presseinrichtung 40. Eis/Wasser-Gemisch 12, 14 bzw. Primärflüssigkeit, welches bereits in einem Kristallisator 30 vorbehandelt wurde, wird mittels eines Bandes 45 oder mehrerer Bänder transportiert. Zwei gegenläufige Bänder 45, 45' definieren eine Engstelle bzw. Spaltverjüngung, welche kleiner als der Durchmesser der Eisteile ist. Das im Eis/Wasser-Gemisch bzw. in der Primärflüssigkeit transportierte Eis 12, oder alternativ auch bereits vorsortiertes Eis 12, kann dieser Spaltverjüngung zugeführt werden und von den Bändern 45 bzw. den beiden gegenüberliegend angeordneten gegenläufig rotierenden und die Bänder 45 antreibenden Walzen 43 gepresst werden. Wie zu anderen Ausführungsbeispielen ausgeführt, können die Bänder 45 Perforierungen 50 aufweisen, um den Abfluss der angereicherten Flüssigkeit zu verbessern.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. In allen Figuren stellen gleiche Bezugszeichen gleiche Gegenstände dar, so dass Beschreibungen von Gegenständen, die ggf. nur in einer oder jedenfalls nicht hinsichtlich aller Figuren erwähnt sind, auch auf diese Figuren übertragen werden können, hinsichtlich welchen der Gegenstand in der Beschreibung nicht explizit beschrieben ist.

### Bezugszeichenliste:

- 10: Anlage
- 12: Primäreis bzw. abgereicherte Flüssigkeit
- 14: Angereicherte Flüssigkeit
- 18: Trag- und Montagegestell
- 24: Wärmetauscher
- 26: Außenwand
- 28: Kühlbereich
- 29: Kühlvolumen
- 30: Kristallisator
- 32: Wandung bzw. Innenseite des Kristallisators
- 33: Ausstülpung der Wandung
- 34: Doppelmantel
- 36: Kältemittel
- 38: Innenraum
- 40: Presseinrichtung bzw. Schnecke
- 41: Welle
- 42: Austrag bzw. Auslass
- 43: Presswalze
- 43': Presswalze
- 44: Gegenpresselement
- 45: Band
- 45': Band
- 46: Antriebseinheit
- 48: Antriebskupplung
- 50: Perforation bzw. Löcher
- 52: Ausgabeschacht
- 54: Trinkwassersammelbehälter
- 60: Wärmepumpe bzw. Inverter
- 62: Energiequelle
- 64: Kältemittelaggregat

## Patentansprüche

1. Verfahren zur Erzeugung von abgereicherter Flüssigkeit (12), insbesondere ionenabgereichertes Trinkwasser, aus einer Primärflüssigkeit, mit den Schritten
- Zuführen der Primärflüssigkeit in eine Kristallisator- und Presskammer (30),
- Kühlung der Primärflüssigkeit in der Kristallisator) und Presskammer (30), so dass die Primärflüssigkeit in der Kristallisator- und Presskammer (30) in den Bereich einer Phasenübergangstemperatur der Primärflüssigkeit oder darunter abgekühlt wird, und zumindest partielles Überführen der Primärflüssigkeit in die feste Phase zur Erzeugung von Primäreis in der Kristallisator- und Presskammer (30);
- mittels einer Presseinrichtung (40, 42, 44, 46, 48) Pressung des Primäreises zum Trennen einer angereicherten Trägerflüssigkeit (14) von der abgereicherten Flüssigkeit,
wobei die Presseinrichtung (40, 42, 44, 46, 48) derart angeordnet ist, dass das Pressen des Primäreises gemeinsam mit der Eisbildung in der Kristallisator- und Presskammer (30) stattfindet,
wobei die angereicherte Trägerflüssigkeit mit gelösten und/oder dispersen Anteilen aus der Primärflüssigkeit angereichert ist und wobei die abgereicherte Flüssigkeit von den gelösten und/oder dispersen Anteilen aus der Primärflüssigkeit abgereichert ist,
wobei die angereicherte Trägerflüssigkeit (14) während der Pressung mittels Entwässerungskanälen (50) aus der Kristallisator- und Presskammer (30) abgeleitet wird.

2. Verfahren nach Anspruch 1,
wobei die Pressung kontinuierlich während der Primäreiserzeugung durchgeführt wird.

3. Verfahren nach einem der vorstehenden Ansprüche, wobei die gelösten und/oder dispersen Anteile beispielsweise Eisen, Mangan, Chlor, Sulfat, Nitrat, Bakterien, Carbonat, gelöstes Kohlenstoffdioxid und andere Moleküle, Ionen oder Partikel umfassen.

4. Anlage (10) zur Bereitstellung von abgereicherter Flüssigkeit (12), insbesondere ionenabgereichertem Trinkwasser, aus einer Primärflüssigkeit, umfassend:
- eine Kristallisator- und Presskammer (30) mit einer Kühleinrichtung (60) zur Überführung der Primärflüssigkeit in die feste Phase und somit zur Bereitstellung von Primäreis aus der Primärflüssigkeit in der Kristallisator- und Presskammer (30),
- eine Presseinrichtung (40, 42, 44, 46, 48) zum Pressen des Primäreises und somit zum Trennen der abgereicherten Flüssigkeit (12) von einer angereicherten Trägerflüssigkeit (14),
wobei die Presseinrichtung (40, 42, 44, 46, 48) derart angeordnet ist, dass das Pressen des Primäreises gemeinsam mit der Eisbildung in der Kristallisator- und Presskammer (30) stattfindet, und
wobei die angereicherte Trägerflüssigkeit mit gelösten und/oder dispersen Anteilen aus der Primärflüssigkeit angereichert ist und wobei die abgereicherte Flüssigkeit von den gelösten und/oder dispersen Anteilen aus der Primärflüssigkeit abgereichert ist und die angereicherte Trägerflüssigkeit (14) während der Pressung mittels Entwässerungskanälen (50) aus der Kristallisator- und Presskammer (30) abgeleitet wird.

5. Anlage (10) nach Anspruch 4,
ferner mit einem Kältemittel (36) zum Entziehen von Wärmeenergie aus der Primärflüssigkeit und/oder
wobei die Kristallisator- und Presskammer (30) in Doppelwandbauweise (34) ausgeführt ist.

6. Anlage (10) nach einem der Ansprüche 4 oder 5,
wobei die Presseinrichtung eine Zwangsfördereinrichtung (40) zur Verschiebung bzw. Lageänderung des Primäreises aufweist, wobei die Zwangsfördereinrichtung (40) insbesondere eine Förderschnecke, ein Extruder, eine Stopfschnecke oder eine Transportschnecke ist.

7. Anlage (10) nach Anspruch 6,
wobei die Zwangsfördereinrichtung (40) geschweißt ist oder aus Vollmaterial gedreht ist, und/oder
wobei die Zwangsfördereinrichtung (40) Edelstahl oder hochfestes Aluminium oder Kunststoff umfasst.

8. Anlage (10) nach einem der Ansprüche 4 bis 7,
wobei die Presseinrichtung (40, 42, 44, 46, 48) einen Unterdruckerzeuger zur Erzeugung eines Unterdrucks in der Kristallisator- und Presskammer (30) umfasst, und/oder
wobei die Presseinrichtung vorzugsweise eine flexible Sperrschicht umfasst.

9. Anlage (10) nach einem der Ansprüche 4 bis 8,
wobei die Presseinrichtung (40, 42, 44, 46, 48) zumindest eine drehbare Presswalze oder zwei benachbart angeordnete gegenläufige Presswalzen zum Pressen des Primäreises umfasst.

10. Anlage (10) nach einem der Ansprüche 4 bis 9,
wobei die Kristallisator- und Presskammer (30) einen Austritt (42) umfasst, und
wobei der Austritt einen geringeren Durchmesser als das in der Kristallisator- und Presskammei (30) bereitgestellte Primäreis aufweist und/oder
wobei das Primäreis mittels der Zwangsfördereinrichtung (40) in Richtung des Austritts (42) bewegt oder verschoben wird.

11. An lage (10) nach Anspruch 10,
ferner mit einem vor dem Austritt (42) angeordneten Gegenpresselement (44), wobei die Zwangsfördereinrichtung (40) hergerichtet und angeordnet ist, das Primäreis gegen das Gegenpresselement zu pressen, um somit die angereicherte Flüssigkeit (14) von der abgereicherten Flüssigkeit bzw. dem Primäreis oder Eisbrei (12) zu trennen.

12. Anlage (10) nach Anspruch 11,
wobei das Gegenpresselement (44) einen über zumindest eine Erstreckungsrichtung sich verjüngenden oder verengenden Querschnitt aufweist, und/oder
wobei das Gegenpresselement Öffnungen (50) aufweist zum Auslass der angereicherten Flüssigkeit (14).

13. Anlage (10) nach einem der Ansprüche 6 bis 12,
wobei die Zwangsfördereinrichtung (40) ein Innenteil aufweist, welches hohl gestaltet ist, insbesondere als Hohlwendel und/oder
wobei die Oberfläche der Zwangsfördereinrichtung eine Oberflächenbeschichtung oder Oberflächenbehandlung aufweist zur Verbesserung der Verschiebung bzw. Bewegung des Primäreises und/oder
wobei die Oberfläche der Zwangsfördereinrichtung Perforationen (50) aufweist zur Verbesserung des Austrags der angereicherten Trägerflüssigkeit (14).

14. Anlage (10) nach einem der Ansprüche 4 bis 13,
wobei die Kühleinrichtung (60) eine Kompressionskältemaschine aufweist.

15. Anlage (10) nach einem der Ansprüche 4 bis 14,
ferner mit einem Zuflussregler zum Einstellen des Zuflusses von Primärflüssigkeit in die Kristallisator- und Presskammer (30),
wobei der Zuflussregler bevorzugt in Abhängigkeit von der produzierten Menge abgereicherter Flüssigkeit (12) regelt und/oder wobei der Zuflussregler ein Schwimmkörper ist.

16. Anlage (10) nach einem der Ansprüche 4 bis 15,
wobei die Kristallisator- und Presskammer (30) eine Abflussöffnung aufweist zum Auslassen der angereicherten Trägerflüssigkeit (14),
wobei der Abfluss der angereicherten Trägerflüssigkeit insbesondere durch eine Leitfähigkeitsmessung ermittelt wird.

17. Anlage (10) nach einem der Ansprüche 4 bis 16,
wobei die Kristallisator- und Presskammer (30) ferner zumindest einen Turbulator aufweist zur Verbesserung des Wärmeübergangs,
wobei der Turbulator in der Kristallisator- und Presskammer (30) angeordnet ist um in Kontakt zur Primärflüssigkeit zu treten und/oder wobei der Turbulator in der Kühleinrichtung (60) angeordnet ist zur Verwirbelung der Kühlflüssigkeit.

## Claims

1. A method for producing a depleted liquid (12), in particular ion-depleted drinking water, from a primary liquid, comprising the steps of
- feeding the primary liquid into a crystallizer and press chamber (30);
- cooling the primary liquid in the crystallizer and press chamber (30) such that the primary liquid in the crystallizer and press chamber (30) is cooled to a range of or below a phase transition temperature of the primary liquid; and
- at least partially converting the primary liquid into the solid phase to produce primary ice in the crystallizer and press chamber (30);
- pressing the primary ice using a pressing device (40, 42, 44, 46, 48) so as to separate an enriched carrier liquid (14) from the depleted liquid;
wherein the pressing device (40, 42, 44, 46, 48) is arranged such that the pressing of the primary ice is accomplished together with the ice formation inside the crystallizer and press chamber (30);
wherein the enriched carrier liquid is enriched with dissolved and/or disperse fractions from the primary liquid and wherein the depleted liquid is depleted of the dissolved and/or disperse fractions from the primary liquid;
wherein the enriched carrier liquid (14) is discharged from the crystallizer and press chamber (30) through drainage passages (50) during the pressing.

2. The method according to claim 1, wherein the pressing is performed continuously during the primary ice production.

3. The method according to any one of the preceding claims, wherein the dissolved and/or disperse fractions include, for example, iron, manganese, chlorine, sulphate, nitrate, bacteria, carbonate, dissolved carbon dioxide and other molecules, ions or particles.

4. An apparatus (10) for providing a depleted liquid (12), in particular ion-depleted drinking water, from a primary liquid, comprising:
- a crystallizer and press chamber (30) comprising a cooling device (60) for converting the primary liquid into the solid phase so as to produce primary ice from primary liquid in the crystallizer and press chamber (30);
- a pressing device (40, 42, 44, 46, 48) for pressing the primary ice so as to separate the depleted liquid (12) from an enriched carrier liquid (14);
wherein the pressing device (40, 42, 44, 46, 48) is arranged such that the pressing of the primary ice is accomplished together with the ice formation inside the crystallizer and press chamber (30); and
wherein the enriched carrier liquid is enriched with dissolved and/or disperse fractions from the primary liquid, and wherein the depleted liquid is depleted of the dissolved and/or disperse fractions from the primary liquid, and wherein the enriched carrier liquid (14) is discharged from the crystallizer and press chamber (30) through drainage passages (50) during the pressing.

5. The apparatus (10) according to claim 4,
further comprising a cooling agent (36) for extracting thermal energy from the primary liquid; and/or
wherein the crystallizer and press chamber (30) is configured as a double-wall structure (34).

6. The apparatus (10) according to any one of claims 4 or 5, wherein the pressing device comprises a forced conveying device (40) for displacing or changing the position of the primary ice, wherein the forced conveying device (40) is in particular a screw conveyor, an extruder, a stuffing screw or a transport screw.

7. The apparatus (10) according to claim 6,
wherein the forced conveying device (40) is welded or turned from solid material; and/or
wherein the forced conveying device (40) comprises stainless steel or high-strength aluminium or plastics material.

8. The apparatus (10) according to any one of claims 4 to 7,
wherein the pressing device (40, 42, 44, 46, 48) comprises a vacuum generator for generating a vacuum in the crystallizer and press chamber (30); and/or
wherein the pressing device preferably comprises a flexible barrier layer.

9. The apparatus (10) according to any one of claims 4 to 8,
wherein the pressing device (40, 42, 44, 46, 48) comprises at least one rotatable pressing roller or two counter-rotating pressing rollers arranged next to one another for pressing the primary ice.

10. The apparatus (10) according to any one of claims 4 to 9,
wherein the crystallizer and press chamber (30) has an outlet (42); and
wherein the outlet has a smaller diameter than the primary ice provided in the crystallizer and press chamber (30); and/or
wherein the primary ice is moved or displaced towards the outlet (42) by the forced conveying device (40).

11. The apparatus (10) according to claim 10,
furthermore comprising a counter-pressing element (44) arranged in front of the outlet (42), wherein the forced conveying device (40) is configured and arranged so as to press the primary ice against the counter-pressing element so as to separate the enriched liquid (14) from the depleted liquid or from the primary ice or ice slush (12), respectively.

12. The apparatus (10) according to claim 11,
wherein the counter-pressing element (44) has a cross section tapering or narrowing along at least one extension direction; and/or
wherein the counter-pressing element has openings (50) for discharging the enriched liquid (14).

13. The apparatus (10) according to any one of claims 6 to 12,
wherein the forced conveying device (40) comprises an inner part which is designed to be hollow, in particular in the form of a hollow helix; and/or
wherein the surface of the forced conveying device has a surface coating or surface finish for improving the displacement or movement of the primary ice; and/or
wherein the surface of the forced conveying device has perforations (50) for improving the discharge of the enriched carrier liquid (14).

14. The apparatus (10) according to any one of claims 4 to 13,
wherein the cooling device (60) comprises a compression refrigeration machine.

15. The apparatus (10) according to any one of claims 4 to 14,
furthermore comprising an inflow controller for adjusting the inflow of primary liquid into the crystallizer and press chamber (30);
wherein the inflow controller preferably controls in response to the amount of depleted liquid (12) produced, and/or wherein the inflow controller is a floating body.

16. The apparatus (10) according to any one of claims 4 to 15,
wherein the crystallizer and press chamber (30) has a discharge opening for discharging the enriched carrier liquid (14);
wherein the discharge of the enriched carrier liquid is determined in particular by a conductivity measurement.

17. The apparatus (10) according to any one of claims 4 to 16,
wherein the crystallizer and press chamber (30) furthermore comprises at least one turbulator for improving heat transfer;
wherein the turbulator is arranged in the crystallizer and press chamber (30) in order to come into contact with the primary liquid; and/or
wherein the turbulator is arranged in the cooling device (60) to swirl the cooling liquid.

## Revendications

1. Procédé de production d'un liquide appauvri (12), en particulier d'eau potable appauvrie en ions, à partir d'un liquide primaire, comprenant les étapes suivantes :
- amenée du liquide primaire dans une chambre de cristallisateur et de compression (30),
- refroidissement du liquide primaire dans la chambre de cristallisateur et de compression (30), de sorte que le liquide primaire est refroidi dans la chambre de cristallisateur et de compression (30) jusqu'à la plage d'une température de transition de phase du liquide primaire ou au-dessous ; et au moins transformation partielle du liquide primaire en phase solide aux fins de produire de la glace primaire dans la chambre de cristallisateur et de compression (30) ;
- au moyen d'un dispositif de compression (40, 42, 44, 46, 48), compression de la glace primaire pour séparer un liquide porteur enrichi (14) du liquide appauvri,
selon lequel le dispositif de compression (40, 42, 44, 46, 48) est installé de manière telle que la compression de la glace primaire a lieu conjointement avec la formation de glace dans la chambre de cristallisateur et de compression (30),
selon lequel le liquide porteur enrichi est enrichi avec des fractions dissoutes et/ou dispersées provenant du liquide primaire, et selon lequel le liquide appauvri est appauvri en fractions dissoutes et/ou dispersées provenant du liquide primaire,
selon lequel le liquide porteur enrichi (14) est évacué de la chambre de cristallisateur et de compression (30) au moyen de canaux d'évacuation (50) pendant la compression.

2. Procédé selon la revendication 1,
selon lequel la compression est effectuée de manière continue pendant la production de glace primaire.

3. Procédé selon l'une des revendications précédentes,
selon lequel les fractions dissoutes et/ou dispersées comprennent par exemple du fer, du manganèse, du chlore, du sulfate, du nitrate, des bactéries, du carbonate, du dioxyde de carbone dissous et d'autres molécules, ions ou particules.

4. Installation (10) pour la mise à disposition de liquide appauvri (12), en particulier d'eau potable appauvrie en ions, à partir d'un liquide primaire, comprenant :
- une chambre de cristallisateur et de compression (30) comportant un dispositif de refroidissement (60) pour faire passer le liquide primaire à la phase solide, et par conséquent pour mettre à disposition de la glace primaire à partir du liquide primaire, dans la chambre de cristallisateur et de compression (30),
- un dispositif de compression (40, 42, 44, 46, 48) pour la compression de la glace primaire et donc pour la séparation du liquide appauvri (12) d'un liquide porteur enrichi (14),
le dispositif de compression (40, 42, 44, 46, 48) étant installé de manière telle que la compression de la glace primaire a lieu conjointement avec la formation de glace dans la chambre de cristallisateur et de compression (30), et
le liquide porteur enrichi étant enrichi avec des fractions dissoutes et/ou dispersées provenant du liquide primaire, et le liquide appauvri étant appauvri en fractions dissoutes et/ou dispersées provenant du liquide primaire, et le liquide porteur enrichi (14) étant évacué de la chambre de cristallisateur et de compression (30) au moyen de canaux d'évacuation (50) pendant la compression.

5. Installation (10) selon la revendication 4,
comprenant en outre un fluide frigorigène (36) destiné à extraire de l'énergie thermique du liquide primaire et/ou
dans laquelle la chambre de cristallisateur et de compression (30) est réalisée en construction à double paroi (34).

6. Installation (10) selon l'une des revendications 4 ou 5,
dans laquelle le dispositif de compression est un dispositif de transport forcé (40) destiné à déplacer ou à modifier la position de la glace primaire, le dispositif de transport forcé (40) étant notamment une vis transporteuse, une extrudeuse, une vis de gavage ou une vis convoyeuse.

7. Installation (10) selon la revendication 6,
dans laquelle le dispositif de transport forcé (40) est soudé ou réalisé par tournage à partir d'un matériau plein, et/ou
dans laquelle le dispositif de transport forcé (40) comprend de l'acier inoxydable ou de l'aluminium à haute résistance ou une matière plastique.

8. Installation (10) selon l'une des revendications 4 à 7,
dans laquelle le dispositif de compression (40, 42, 44, 46, 48) comprend un générateur de vide destiné à créer une dépression dans la chambre de cristallisateur et de compression (30), et/ou
dans laquelle le dispositif de compression comprend de préférence une couche de barrage souple.

9. Installation (10) selon l'une des revendications 4 à 8,
dans laquelle le dispositif de compression (40, 42, 44, 46, 48) comprend au moins un rouleau de pression rotatif ou deux rouleaux de pression disposés à proximité l'un de l'autre et tournant en sens inverse, pour la compression de la glace primaire.

10. Installation (10) selon l'une des revendications 4 à 9,
dans laquelle la chambre de cristallisateur et de compression (30) comprend une sortie (42), et
dans laquelle la sortie présente un diamètre plus faible que la glace primaire mise à disposition dans la chambre de cristallisateur et de compression (30), et/ou
dans laquelle la glace primaire est déplacée ou glissée en direction de la sortie (42) au moyen du dispositif de transport forcé (40).

11. Installation (10) selon la revendication 10,
comprenant en outre un élément de contre-pression (44) disposé devant la sortie (42), le dispositif de transport forcé (40) étant agencé et disposé pour presser la glace primaire contre l'élément de contre-pression, afin de séparer ainsi le liquide enrichi (14) du liquide appauvri, respectivement de la glace primaire ou de la bouillie de glace (12).

12. Installation (10) selon la revendication 11,
dans laquelle l'élément de contre-pression (44) présente une section transversale diminuant ou se rétrécissant au moins dans une direction d'extension, et/ou
dans laquelle l'élément de contre-pression présente des ouvertures (50) pour l'évacuation du liquide enrichi (14).

13. Installation (10) selon l'une des revendications 6 à 12,
dans laquelle le dispositif de transport forcé (40) présente une pièce interne qui est réalisée sous une forme creuse, en particulier comme spirale creuse, et/ou
dans laquelle la surface du dispositif de transport forcé présente un revêtement de surface ou un traitement de surface destiné à améliorer le glissement ou le déplacement de la glace primaire, et/ou
dans laquelle la surface du dispositif de transport forcé présente des perforations (50) destinées à améliorer l'évacuation du liquide porteur enrichi (14).

14. Installation (10) selon l'une des revendications 4 à 13, dans laquelle le dispositif de refroidissement (60) présente une machine frigorifique à compression.

15. Installation (10) selon l'une des revendications 4 à 14,
comprenant en outre un régulateur de débit destiné à réguler l'afflux de liquide primaire dans la chambre de cristallisateur et de compression (30),
le régulateur de débit régulant de préférence en fonction de la quantité produite de liquide appauvri (12), et/ou le régulateur de débit étant un corps flottant.

16. Installation (10) selon l'une des revendications 4 à 15,
dans laquelle la chambre de cristallisateur et de compression (30) présente une ouverture d'écoulement destinée à l'évacuation du liquide porteur enrichi (14),
l'écoulement du liquide porteur enrichi étant déterminé notamment par une mesure de conductivité.

17. Installation (10) selon l'une des revendications 4 à 16,
dans laquelle la chambre de cristallisateur et de compression (30) présente en outre au moins un turbulateur destiné à améliorer le transfert de chaleur,
le turbulateur étant disposé dans la chambre de cristallisateur et de compression (30) aux fins d'entrer en contact avec le liquide primaire, et/ou le turbulateur étant installé dans le dispositif de refroidissement (60), aux fins de tourbillonner le liquide de refroidissement.
